# EUROPÄISCHE PATENTANMELDUNG

(11) **EP 2 026 032 A1**
(43) Veröffentlichungstag der Anmeldung: **18.02.2009**
(21) Anmeldenummer: 07405240.8
(22) Anmeldetag: 16.08.2007
(51) Int. Cl.: G01B 7/06

(54) **Messung der Dicke einer Einzelschicht einer Mehrschichtfolie**

(71) Anmelder: Hch. Kündig & Cie. AG, 8630 Rüti/ZH (CH)
(72) Erfinder: Hänggli, Markus, 8630 Rüti/ZH (CH)
(74) Vertreter: Irsch, Manfred

(57) **Zusammenfassung**

Die Methode ermöglicht das Bestimmen des Anteils eines ersten Materials A in einem Verbund mit mindestens einem weiteren Material B. Das erste Material A erzeugt in einem Messgerät (16; 17) einen höheren oder tieferen Messwert als für das Material B. Bei der Methode wird vom Messwert für den Verbund aus allen Materialien (A, B) ein Wert abgezogen, der mit dem Messgerät (16; 17) erhalten wird, wenn das Messgut (13; 20) nur aus Material B besteht.

Besteht der Verbund aus mehr als zwei Materialien, werden die Materialien A₁ bis AN, für welche das Messgerät gleiche oder ähnliche Messwerte erzeugt einer ersten Gruppe GA zugeordnet und die Materialien B₁ bis B_{M}, welche unter sich gleiche oder ähnliche aber von den Materialien A₁ bis AN, der ersten Gruppe GA verschiedene Messewerte erzeugen, einer zweiten Gruppe GB zugeordnet. Dabei kann eine Gruppe auch nur aus einem einzigen Material gebildet werden.

## Beschreibung

Die Erfindung bezieht sich auf ein Verfahren zum Bestimmen der Dicke einer Schicht einer Mehrschichtfolie nach dem Oberbegriff des unabhängigen Anspruchs 1.

Um das Dickenprofil einer Folienblase online zu erfassen, wird ein Sensor 17, welcher nach dem Reflexionsprinzip arbeitet, auf einer ringförmigen Konstruktion 17' um die Folienblase herumgeführt. Ein Umlauf dauert typischerweise 1-2 Minuten.
Mehrschichtfolien aus Kunststoffen sind aus einer Vielzahl von Schichten aus verschiedenen Werkstoffen aufgebaut.

Die Mehrschichtfolien werden aus verschiedenen sog. Thermoplasten, mit Coextrusion bzw. Mehrschichtextrusion hergestellt. Bekannte solche Extrusionsverfahren sind Blasextrusion und Flachextrusion.

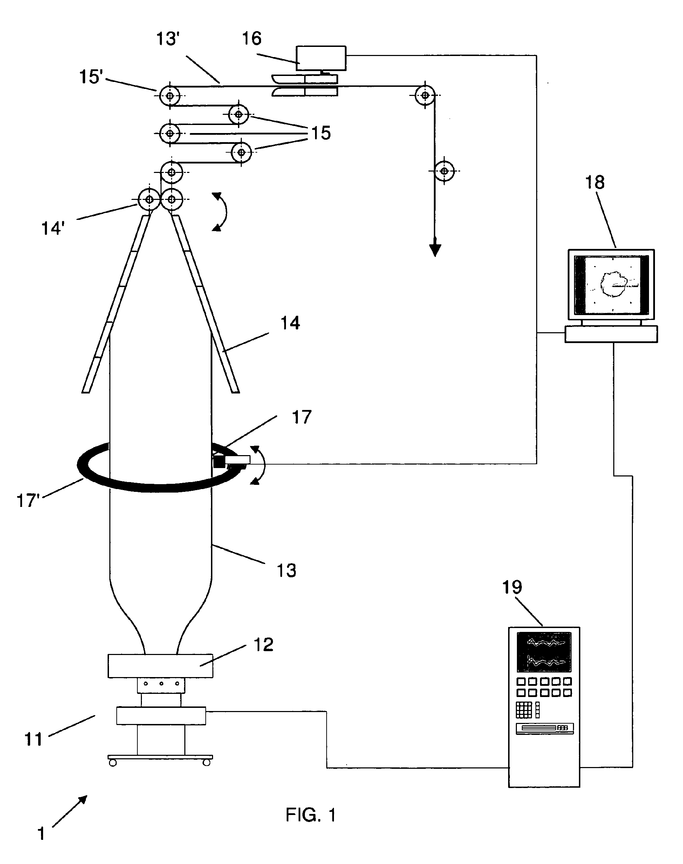

Bei der Blasextrusion werden sog. Blasfolien erzeugt. Der Aufbau einer Blasfolienanlage wird in Einzelheiten später anhand von Fig. 1 näher erläutert.

Häufig verwendete Thermoplaste für Folien sind Polyethylen (PE), Polypropylen (PP), Polyvinylchlorid (PVC), Polyamid (PA), Ethylen-Vinylalkohol-Copolymere (EVOH), und andere mehr. Folien aus PE sind zwar siegelfähig und wasserdampfundurchlässig aber nicht sauerstoffdicht. Hingegen haben Folienmaterialien wie PA und EVOH extrem gute Sperreigenschaften gegen Sauerstoff (EVOH nur in trockenem Milieu), doch sind sie nicht siegelfähig. Aufgrund dieser guten Sperreigenschaften werden die Schichten aus diesem Material Sperrschicht oder Barriereschicht genannt. Diese beiden Ausdrücke werden im Nachfolgenden gleichwertig verwendet.

Um die guten Eigenschaften der einzelnen Materialien zu kombinieren, werden viele Verpackungsfolien als Mehrschichtfolien hergestellt. Bei deren Herstellung werden gleichzeitig verschiedene Thermoplaste mit verschiedenen Eigenschaften durch Mehrfachdüsen extrudiert und zur Mehrschichtfolie vereinigt. In vielen Fällen ist es erforderlich, zwischen einzelnen Schichten der Mehrschichtfolie sog. Haftvermittler (HV) einzubringen. Die Haftvermittler haben die Bindung zwischen Schichten der Mehrschichtfolie zu verbessern. Ein häufig gebrauchter Schichtaufbau für Verpackungsfolien besteht deshalb aus einer mittleren Schicht aus EVOH oder PA oder beiden, die durch beidseitig aufgebrachte siegelfähige Schichten aus LDPE gegen die Einwirkung von Wasserdampf geschützt ist. Zwischen den verschiedenen Schichten ist jeweils noch ein Haftvermittler eingefügt, damit die Haftung der Schichten aneinander gewährleistet ist.

Weitere Einzelheiten über Mehrschichtfolien, die dafür verwendeten Materialien und deren Eigenschaften, sowie deren Herstellung findet man z.B. in gut verständlicher Form im Buch "Kunststoff-Folien, Herstellung, Eigenschaften, Anwendung" von Joachim Nentwig, Carl Hanser Verlag München Wien, 1994.

Bei der Herstellung von Folien ganz allgemein, aber insbesondere auch bei der Herstellung von Mehrschichtfolien wird die Dicke der Folien überwacht, und bei Abweichungen wird z.B. bei der Herstellung von Flachfolien die Breite des Schlitzes von Extrusionsdüsen verändert, um möglichst Folien gleicher Dicke herzustellen. Bei der Blasfolienextrusion wird lokal die Temperatur der Schmelze oder der Kühlluft oder die Menge der Kühlluft verändert.

Damit z.B. die Qualität der Blasfolie auf dem ganzen Umfang gleich ist, muss die Dicke auf dem ganzen Umfang möglichst gleichmässig sein. Eine gleichmässige Dicke ist unter anderem auch notwendig, um bei der weiteren Verarbeitung der Folie z.B. ein gleichmässiges Bedrucken zu ermöglichen. Um eine gleichmässige Dicke in der Produktion zu überwachen oder durch Stellelemente im Blaskopf zu regeln, muss das Dickenprofil der Folie gemessen werden.
Es sind beispielsweise folgende Sensortypen für die Dickenmessung an Folien bekannt:
Kapazitive Sensoren welche durch die Dielektrizitätskonstante der Materialien der Folie und/oder den Dämpfungsfaktor der Folie beeinflusst werden. Kapazitive Sensoren können reflektiv oder transmissiv messen.
Sensoren die mit ionisierender Strahlung, mit Rückstreuung oder mit Absorption arbeiten und messen.
Sensoren die mit Infrarot-Absorption transmissiv arbeiten und messen. Sensoren welche optisch mit Interferenz-Verfahren arbeiten und messen. Sensoren welche mechanisch oder pneumatisch die Dicke nach der Flachlegung messen.
Sensoren die thermisch messen.
Sensoren, welche Ultraschall verwenden und Laufzeiten, Dämpfung, Reflexion und/oder Phasenverschiebungen messen. Optische Sensoren können nur verwendet werden, wenn nicht stark eingefärbte Folien gemessen werden müssen.

Bisher werden während der Folienproduktion fast ausschliesslich Verfahren zur Messung und Regelung der Gesamtdicke eingesetzt. Zur Messung von Einzelschichten sind beispielsweise optische Verfahren bekannt, welche die Absorption von speziellen Spektralbereichen im IR ausnützen.

Zur Messung des Dickenprofils von Einzelschichten mit kapazitiven Sensoren gibt es bisher die nachfolgend aufgezählten Ansätze. Alle verwenden gleichzeitig mindestens zwei verschiedene Messgeräte, von denen nur eines stark empfindlich ist auf die Dielektrizitätskonstante. Aus den unterschiedlichen Messresultaten der Sensoren werden die Dicken der Schichten mit unterschiedlicher Dielektrizitätskonstante berechnet.

Der Dicken-Mittelwert und das Dickenprofil werden separat geregelt. Dies gilt sowohl für die Gesamtdicke, als auch für die Dicke von einzelnen Schichten. Der Mittelwert der Dicke wird meistens geregelt, indem eine bestimmte Menge von Rohstoffen pro Zeiteinheit in die Extruder eingespiesen wird. Gleichzeitig wird der Durchmesser der hergestellten Folienblase beziehungsweise die Breite der hergestellten Folienbahn auf einen konstanten Wert geregelt. Zudem wird die Abzugsgeschwindigkeit und somit die Folienlänge pro Zeiteinheit auf einen konstanten Wert geregelt. Diese Methode wird gravimetrische Verwiegung genannt.

Wie in den genannten Dokumenten, wird bei der Erfindung ausgenützt, dass sich die Sperrschichtmaterialien in der Dielektrizitätskonstanten deutlich von den Materialien der andern Schichten unterscheiden.

Allgemein kann das Verfahren benützt werden, um den Anteil oder die Verteilung eines Materials A in einer Zusammensetzung bestehend aus mindestens zwei verschiedenen Materialien, zum Beispiel A und B zu bestimmen, indem ein Messverfahren benützt wird, welches auf die Materialien A und B unterschiedlich reagiert.

Verschiedene Verfahren zur Messung der Dicke einer Einzelschicht in einem mehrschichtigen Messgut sind u.a. in folgenden Dokumenten beschrieben
D1: US 4,514,812, Miller, 1972
   Eine mechanische Dickenmessung, eine Flächengewichtsmessung und eine kapazitive Messung werden kombiniert zur Bestimmung einer Laminatschicht mit höherer Dielektrizitätskonstante als die gleichzeitig extrudierte Schaumschicht.
D2: US 3.635,620, Brown, 1985
   Eine mechanische Dickenmessung und eine kapazitive Messung werden kombiniert, um die Dicken von zwei verschiedenen Beschichtungen eines Leiters zu messen, wobei ausgenützt wird, dass die Dielektrizitätskonstanten der beiden Beschichtungsmaterialien deutlich verschieden sind
D3: EP 1 205 293, Müller 2000
   Die Barriereschicht in einer Mehrschichtfolie wird bestimmt, indem eine Messung an der heissen Folienblase mit einem reflektiv wirkendem kapazitiven ersten Sensor und eine Messung an der kalten Folie nach der Flachlegung mit einem transmissiv wirkenden kapazitiven zweiten Sensor durchgeführt werden. Es wird ausgenützt, dass der erste Sensor bei einer höheren Folientemperatur eingesetzt wird, wo die Dielektrizitätskonstante der Barriereschicht erhöht ist. Der Effekt wird dadurch verstärkt, dass der erste Sensor dem Messprinzip entsprechend empfindlicher auf die Dielektrizitätskonstante reagiert als der zweite Sensor, welcher transmissiv misst.
D4: WO 2007/048499 A1, Keller 2006
   Eine kapazitive Messung wird kombiniert mit einer Flächengewichtsmessung mit Gamma-Rückstreuung. Diese Methode baut auf den Erkenntnissen der Patente US-4,514,812 und US-3.635,620 auf.

Bei all diesen Verfahren werden zwei Messgeräte verwendet.
Die erfindungsgemässe Lösung besteht darin, ein Messverfahren zu schaffen, bei der das Dickenprofil einer einzelnen Schicht, speziell der Barriereschicht einer Mehrschichtfolie, bestimmt wird, indem die Messwerte von nur einem kapazitiven Messgerät mit den Sollwerten der Produktion verrechnet werden.

Die vorliegende Erfindung bringt hier eine wesentliche Vereinfachung der Bestimmung der Dicke einzelner Schichten indem nur ein einziges Messgerät verwendet wird. Erfindungsgemäss wird die Aufgabe mit einer Messmethode gelöst, welche die Merkmale im Kennzeichen des unabhängigen Anspruchs 1 aufweist.

PE hat eine Dielektrizitätskonstante von εᵣ = 2.3. Diese ist nicht temperaturabhängig. Die verwendeten Haftvermittler (HV) haben im allgemeinen ein ähnliches εᵣ wie PE.
PA hat eine Dielektrizitätskonstante von εᵣ = 4 (bei < 40°C) bis ca. 18 (bei 90°C).
EVOH zeigt ein ähnliches Verhalten wie PA. Die dielektrischen Eigenschaften verschiedener Kunststoffe sind zum Beispiel beschrieben im Buch "Die Kunststoffe und ihre Eigenschaften" von Domininghaus, Springer Verlag. 5. Auflage 1997, S 128

Zur Vereinfachung werden nachfolgend immer nur PE als Hauptmaterial mit "normaler" Dielektrizitätskonstante εᵣ = 2.3 und PA oder als Repräsentanten für typisches Sperrschichtmaterial mit hoher Dielektrizitätskonstante εᵣ = 4 ... 15 genannt. Für die nachfolgenden Betrachtungen können alle Schichten mit ähnlicher Dielektrizitätskonstanten zusammengefasst werden, sodass nur noch die zwei Schichten PE und PA betrachtet werden müssen.

Abhängigkeit des kapazitiven Sensors von εᵣ: Bei der kapazitiven Messung nach dem Reflexionsprinzip wirkt die Folie als Dielektrikum im Randfeld eines Kondensators. Die Messempfindlichkeit ist im Wesentlichen direkt proportional zur Dicke und **direkt proportional zur Dielektrizitätskonstanten** der zu messenden Folie. Die Kapazitätsänderung wird erfasst und daraus die aktuelle Foliendicke an dieser Position bestimmt. Dies ermöglicht eine sehr gute und exakte Online-Erfassung des Dickenprofils von z.B. PE-Folien.

Die direkte Empfindlichkeit des kapazitiven Sensors auf die Dielektrizitätskonstante ist der entscheidende Punkt für die nachfolgend beschriebene Erfindung.

Wie erwähnt sind zum Beispiel PA (Polyamid) und EVOH (Ethylenvinylalkohol) zwei typische Barriere-Materialien, welche speziell für Sauerstoff praktisch undurchlässig sind. Beide haben zudem die Eigenschaft, dass ihre Dielektrizitätskonstante deutlich höher ist, als diejenige von PE (Polyethylen). Zudem steigt dieser Wert mit der Temperatur wesentlich an, was bedeutet, dass dieser Effekt bei hohen Temperaturen besonders stark ausgeprägt ist.

Eine spezielle Eigenschaft des reflektiv wirkenden kapazitiven Sensors ist es, dass er stark empfindlich ist auf die Dielektrizitätskonstante des Folienmaterials. Wenn sich in einer Mehrschichtfolie der Anteil der Sperrschicht gegenüber der Gesamtdicke verändert, wird diese Anteil-Veränderung stärker erfasst, als diejenige der Gesamtdicke.

Dieser Effekt verfälscht einerseits die kapazitive Messung der Gesamtdicke der Folie. Andererseits kann diese überproportionale Empfindlichkeit ausgenutzt werden, um bei Mehrschichtfolie mit einem Anteil an Material mit einer höheren Dielektrizitätskonstanten (PA, EVOH) das Profil dieses Anteils in guter Näherung zu bestimmen.

Zur Messung des Dickenprofils von Einzelschichten mit kapazitiven Sensoren sind beispielsweise die vorstehend beschriebenen Verfahren bekannt.

Alle diesen Verfahren ist gemeinsam, dass sie gleichzeitig mindestens zwei verschiedene Messgeräte verwendet, von denen nur eines stark empfindlich ist auf die Dielektrizitätskonstante. Aus den unterschiedlichen Messresultaten der Sensoren werden die Dicken der Schichten mit unterschiedlicher Dielektrizitätskonstante berechnet.

Weiter ist allen diesen Methoden gemeinsam, dass neben einem Messgerät, welches stark empfindlich ist auf die Dielektrizitätskonstante ein weiteres Messgerät eingesetzt wird. Die Dickenprofile der beiden Messgeräte müssen möglichst exakt aufeinander synchronisiert werden, was besonders aufwendig ist bei der Methode nach EP 1 205 293, weil dort Messort und Umfangsgeschwindigkeit bei beiden verschieden sind.

Die Methode nach D4 bietet die beste Messgenauigkeit. Bei sehr dünner Folie wird aber die Gammarückstreuung so schwach, dass die dadurch hervorgerufenen stochastischen Schwankungen grösser werden als die Dickenschwankungen der Folie.

Aufgabe der Erfindung ist es, ein Messverfahren anzugeben, das es gestattet, das Dickenprofil einer einzelnen Schicht, speziell der Barriereschicht einer Mehrschichtfolie, zu bestimmen, indem die Messwerte von nur einem Messgerät, vorzugsweise einem kapazitiven Messgerät, mit den Sollwerten der Produktion verrechnet werden.

Im Folgenden wird anhand eines kapazitiv reflektiv arbeitenden Messgeräts 17, 24 gezeigt, wie das Dickenprofil der Barriereschicht einer Mehrschichtfolie aus den Messwerten dieses Messgeräts und den Sollwerten der Produktion berechnet werden kann. An Stelle der Sollwerte für die Dicke, können auch die gravimetrisch bestimmten Dickenwerte für die Berechnung verwendet werden.

### Bezeichnungen

**Tabelle 1: Bezeichnungen**

| **Zeichen** | **Bedeutung** | |
|---|---|---|
| D | Gesamtdicke der Folie, D = DE + DA | |
| DG | Gesamtdicke, Mittelwert durch Gravimetrie bestimmt | |
| D2 | Dickenmesswert des Messgeräts 17 | |
| DE | Dicke der PE-Schicht (Summe aller Schichten mit ähnlicher Dielektrizitätskonstante wie PE) | |
| DA | Dicke der Sperr-Schicht (bzw. Summe aller Schichten mit ähnlicher Dielektrizitätskonstante wie die Sperrschicht) | |
| εA | Dielektrizitätskonstante der Sperrschicht | εA = 10....18 (siehe Kap. 2.1) |
| εE | Dielektrizitätskonstante von PE | εE = 2.3 |

### Berechnung der Dicke der Barriere-Schicht:

### Voraussetzungen / Annahmen:

- Das Messgerät 17 sei auf den Mittelwert der Gesamtdicke bei PE kalibriert.
- Der Mittelwert der Gesamtdicke und der Mittelwert des PA-Anteils (bzw. alle Sperrschichten zusammen) und somit auch der Mittelwert der restlichen (PE-ähnlichen) Anteile sei **bekannt** und für die Profilberechnung **verfügbar.** Dieser Mittelwert entspricht im Allgemeinen der Solldicke oder kann von der gravimetrischen Verwiegung genauer bestimmt werden.

**Tabelle 2 Grundgleichungen und Herleitungen**

| **Methode** | **GI. Nr.** | **Gleichung** | **Bemerkung** |
|---|---|---|---|
| Messcharakteristik kapazitiv reflexiv, Sensor kalibriert auf PE | (I) | **D2 = DE + DA * εA /** ε**E** | gilt für Mittelwerte und für einzelne Messpunkte |
| Sollwerte oder Gravimetriewerte | (II) | **D = DE +DA** | |
| (I) - (II) | (III) | **D2 - D = DA (**ε**A /** ε**E - 1)** | |
| Vereinfachung, Definition | (IV) | **K = (**ε**A /** ε**E - 1)** | |
| (IV) in (III) | (V) | **D2 - D = DA * K** | |
| aus (V) | (VI) | **K = (D2 - D)/DA** | Bestimmung von K aus den Mittelwerten |
| aus (VI) | (VII) | **DA = (D2 - D) / K** | DA, D2: Profilwerte D, K: Mittelwerte |

Im ersten Schritt wird mit den Formeln gemäss Tabelle 2 das aktuelle, über ein ganzes Profil gemittelte Verhältnis ε**A /** ε**E** bestimmt, welches von der Art der Barrierematerialien und der Temperatur abhängt, beziehungsweise der Term K = (εA / εE - 1). Für diese Berechnung wird der Mittelwert von D2 über ein ganzes Profil verwendet.

Im zweiten Schritt wird aus den einzelnen Profilwerten von D2 durch Subtraktion des Mittelwertes D, das heisst des Sollwertes, respektive desjenigen Messwertes, welcher gemessen würde, wenn alle Schichten ausschliesslich aus PE (oder Materialien mit ähnlicher Dielektrizitätskonstante) wären, jeder einzelne Profilwert von DA bestimmt.

In der Gleichung Nr. VII der Tabelle 2 bewirkt der Faktor 1/K eigentlich eine Kalibrierung, durch welche die Dickenwerte der Barriereschicht so kalibriert werden, dass der Mittelwert aller Dickenwerte eines Profils wieder mit dem Mittelwert, bzw. mit dem Sollwert der Barriereschicht übereinstimmen.

Diese Kalibrierung erfolgt für kapazitiv reflektive Messgeräte gemäss der Gleichung VI, wobei D2 der Mittelwert der Messwerte über ein ganzes Profil ist und D und DA Sollwerte oder gravimetrisch bestimmte Werte sind. Da die kapazitive Dickenmessung immer nur eine relative und nicht eine absolute Messung ist, wird diese Kalibrierung bei der Herstellung von Mehrschichtfolien häufig nicht direkt im Messgerät, sondern erst nachträglich im Visualisierungs- oder Regelsystem gemacht. Da die Profilregelung normalerweise nicht die Absolutwerte korrigiert, sondern nur die Abweichungen vom Mittelwert, kann die Kalibrierung auch ganz weggelassen werden.

Bei beliebigen anders arbeitenden Messgeräten kann die Kalibrierung so erfolgen, dass der Mittelwert der gemessenen Profilwerte mit dem Sollwert der Dicke übereinstimmt.

Anstelle der kapazitiven Messung mit dem reflektiven Prinzip kann auch eine kapazitive Messung mit dem transmissiven Prinzip 16, 21 verwendet werden, welches an der flachgelegten Folie 13' eingesetzt wird. Die Abhängigkeit von εᵣ bei diesem Prinzip ist aber viel schwächer und deshalb für das Verfahren gemäss dieser Erfindung weniger geeignet.

Grundsätzlich kann diese Methode mit allen Messverfahren eingesetzt werden, welche auf eine Materialeigenschaft einer bestimmten Schicht empfindlicher oder unempfindlicher ist, als auf diejenigen der andern Schichten. Dies kann zum Beispiel optische Absorption im Transmissionsverfahren sein oder das spezifische Gewicht bei einer Flächengewichtsbestimmung. So könnte zum Beispiel mit einem Messgerät, das mit ionisierender Strahlung das Flächengewicht misst, die Eigenschaft des Barrierematerials ausnützen, dass dessen Dichte etwa 20% höher ist, als diejenige von PE.

Das Verfahren kann nicht nur angewendet werden für eine einzige zusammenhängende Schicht aus einem Material A, sondern auch für eine Gruppe GA aus N einzelnen Schichten aus den Materialien A₁ bis A_{N} vorausgesetzt, das verwendete Messverfahren, bzw. Messgerät reagiert auf alle diese Materialien A₁ bis A_{N} gleich oder ähnlich empfindlich und auf die restlichen Materialien B₁ bis B_{M} der Gruppe GB der restlichen Schichten gleich oder ähnlich verschieden. Dabei können beide oder eine der Gruppen GA und GB nur ein einziges Material, bzw. eine einzige Schicht umfassen.

Eine 7-Schicht-Folie kann z.B. wie folgt aufgebaut sein:
PE+HV+PA+HV+EVOH+HV+PE
(PE = Polyethylen; HV = Haftmittel mit ähnlichem εᵣ wie PE; PA = Polyamid; EVOH = Ethylenvinylalkohol) Das Verfahren liefert dann die Summe der Dickenprofile von PA und EVOH.

Das Verfahren kann ebenfalls nicht nur angewendet werden, wenn das Material A in einer Mehrschichtfolie als Schicht ausgebildet ist, sondern allgemein, wenn das Material A inhomogen in einem Verbund mit dem Material B verteilt ist. Das Ergebnis der Messung ist dann nicht eine Schichtdicke, sondern eine Materialkonzentration im Verhältnis zur Gesamtmenge, was als lokaler Anteil im Verbund bezeichnet wird.

Als lokaler Messwert wird ein Messwert an einer bestimmten Stelle, z.B. an einer Position am Umfang der Folienblase, bezeichnet, dies im Gegensatz zum Mittelwert der Messwerte über den ganzen Umfang der Folienblase.

Erreichbare Genauigkeit mit der neuen Messmethode:
Die neue Methode benutzt einerseits die um einen bestimmten Faktor erhöhte Empfindlichkeit des Messgeräts auf den einen Materialtyp. Gleichzeitig wird die vereinfachende Annahme getroffen, dass die Gesamtdicke nicht zu stark streut, weil nur ein Mittelwert der Gesamtdicke vom Messwert abgezogen wird, und nicht die echte lokale Gesamtdicke. Der Unterschied in der Empfindlichkeit, multipliziert mit dem Anteil DA an der Gesamtdicke D muss mindestens so gross sein, wie die Summe der Streuung des Messwertes D2 bei gleichbleibender Gesamtdicke und Zusammensetzung.

Die erreichbare Genauigkeit hängt im Wesentlichen vom Verhältnis DA/DE bzw. DA/D ab. Einen wichtigen zusätzlichen Einfluss hat bei der kapazitiven Methode die Temperatur bzw. die Temperaturabhängigkeit von εᵣ der Barriereschicht. Je höher die Dielektrizitätskonstante des Barriere-Materials ist, und je höher der Anteil des Barrierematerials ist, desto genauer ist die Bestimmung des Profils dieses Barrierematerials.

Es ist in der Praxis nicht notwendig, das Profil der Barriereschicht mathematisch exakt berechnen zu können. Die Sperrschicht, zum Beispiel aus relativ teurem EVOH, sollte möglichst dünn sein, darf jedoch eine gewisse Mindestdicke nicht unterschreiten, damit die Undurchlässigkeit gegenüber Sauerstoff gewährleistet bleibt. Das Ziel der Berechnung ist deshalb nicht in erster Linie eine exakte Erfassung des Barriere-Profils, sondern die Möglichkeit, Dünnstellen oder Abrisse in dieser Schicht festzustellen. Solche treten typischerweise während des Anfahrens der Linie auf. Wenn das Profil der Barriereschicht überwacht werden kann, ist es möglich zu einem früheren Zeitpunkt in die Produktionsphase überzugehen. Im Dauerbetrieb können Dünnstellen auf eine Verschmutzung im Blaskopf hindeuten. Durch Überwachen des Barriereprofils kann der optimale Zeitpunkt für einen Betriebsunterbruch zur Reinigung des Blaskopfes bestimmt werden.

Die Methode mit kapazitiven Sensoren kann noch verfeinert werden, indem deren nichtlineare Messcharakteristik berücksichtigt wird. Ebenso kann das Temperaturprofil der Folie gemessen werden und die Abhängigkeit von εA von der Temperatur berücksichtigt werden. Dieser Aufwand ist aber im allgemeinen nicht nötig.

Das Dickenprofil einer einzelnen Schicht einer Mehrschichtfolie, speziell der Barriereschicht wird gemessen, indem die Dickenmesswerte von nur einem kapazitiven Messgerät mit den Dickensollwerten dieser Schicht und der Gesamtdicke verrechnet werden.

Im ersten Schritt wird das aktuelle, über ein ganzes Profil gemittelte Verhältnis der Dielektrizitätskonstanten der Barriereschicht gegenüber der andern Schichten bestimmt, welches von der Art der Barrierematerialien und der Temperatur abhängt. Für diese Berechnung wird der Mittelwert der Messwerte über ein ganzes Profil verwendet.

Im zweiten Schritt wird aus den einzelnen Profilwerten der kapazitiven Dickenmessung durch Subtraktion desjenigen Messwertes, welcher gemessen würde, wenn alle Schichten ausschliesslich aus PE (oder Materialien mit ähnlicher Dielektrizitätskonstante) wären, jeder einzelne Profilwert der Barriereschicht bestimmt.

Wenn in der vorliegenden Schrift von einer lokalen Dicke die Rede ist, so ist damit der Dickenwert am Messpunkt des Messgeräts gemeint, dies im Gegensatz zur mittleren Dicke der Folie, bzw. der Schicht.

Das Extrusionsverfahren wird anhand der schematischen Fig. 1 erläutert, welche eine Blasextrusionsanlage mit dem Messgerät zeigt.

In der Blasextrusionsanlage von Fig. 1 wird die Schmelze aus einer Ringdüse 12 extrudiert und zu einem Schlauch 13 geformt. In den Schlauch wird Luft eingeblasen um diesen aufzuweiten. Der Schlauch wird durch die Flachlegung 14 geführt und zwischen zwei Walzen 14' flachgepresst, in vielen Fällen in zwei oder mehr Bahnen geschnitten und aufgewickelt.

Bei der Flachextrusion wird die Schmelze aus einer Schlitzdüse extrudiert.
In Fig. 1 sind zwei mögliche Einbauorte der Messgeräte für die Messung der Foliendicke gezeigt.

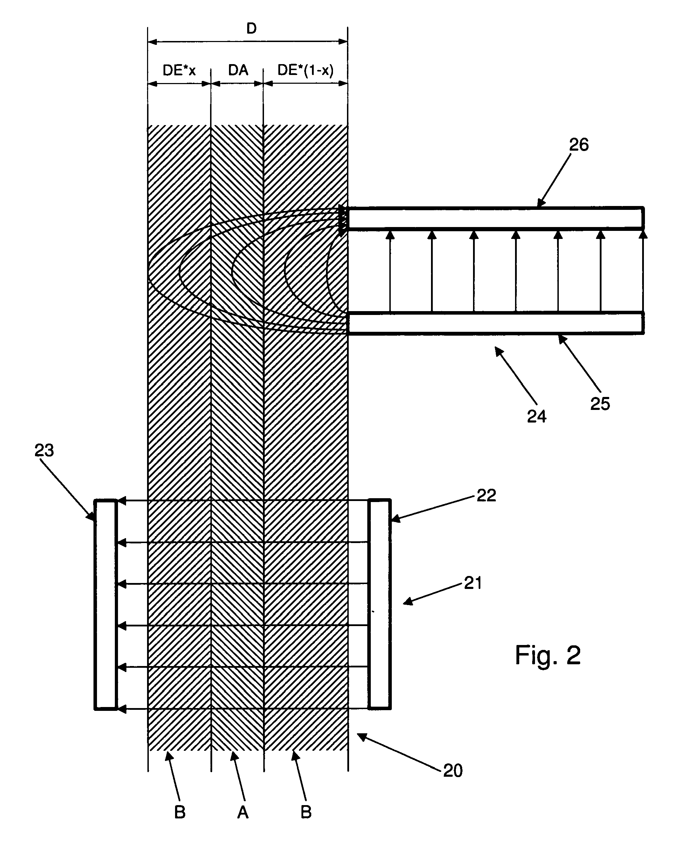

Fig. 2 zeigt schematisch den Unterschied im Aufbau zwischen den beiden erwähnten kapazitiven Messverfahren.
Für die Regelung des Dickenprofils der Folie ist es günstiger, die Foliendicke möglichst kurz nach dem Blaskopf zu erfassen, also mit einem Messgerät 17 noch an der Folienblase , nicht erst viele Meter später, zum Beispiel mit einem transmissiv wirkenden Messgerät 16 an der flachgelegten Folie 13'. Dies ist aber nur möglich mit Messsystemen, welche allein von aussen an der Folienblase mit einem reflektiven System arbeiten. Am häufigsten werden kapazitive Systeme verwendet. Sensoren, welche mit der Rückstreuung von ionisierender Strahlung arbeiten, werden wegen der damit verbundenen Risiken und Sicherheits-Auflagen nur ungern eingesetzt.

Sind an einer Mehrschichtfolie 20 beide Seiten zugänglich, kann auf der einen Seite die erste Platte 22 und auf der andern Seite die zweite Platte 23 eines Plattenkondensators 21 angebracht werden. Das elektrische Feld zwischen den Platten durchdringt die Folie. Deshalb wird diese Messart kapazitiv transmissiv genannt.

Im Unterschied dazu ist bei einer Folienblase nur die Aussenseite zugänglich. Wird ein Kondensator 24 so an die Folie angebracht, dass das Randfeld zwischen den beiden Platten 25 und 26 in die Folie eindringt, wird durch die dielektrische Wirkung der Folie die Kapazität des Kondensors des Messgeräts erhöht. Diese Messart wird kapazitiv reflektiv genannt.

Bis heute sind vor allem Mess- und Regelsysteme für die Gesamtdicke von Folien bekannt, da noch kaum Extrusionsanlagen bestehen, welche die Dicke einer Barriereschicht unabhängig von der Gesamtdicke regeln können. Auf die Online Erfassung des Dickenprofils der Barriereschicht wurde deshalb bisher weniger Wert gelegt.

Die Methode ermöglicht das Bestimmen des Anteils eines ersten Materials A in einem Verbund mit mindestens einem weiteren Material B. Das erste Material A erzeugt in einem Messgerät (16; 17) einen höheren oder tieferen Messwert als für das Material B. Bei der Methode wird vom Messwert für den Verbund aus allen Materialien (A, B) ein Wert abgezogen, der mit dem Messgerät (16; 17) erhalten wird, wenn das Messgut (13; 20) nur aus Material B besteht.
Besteht der Verbund aus mehr als zwei Materialien, werden die Materialien A₁ bis AN, für welche das Messgerät gleiche oder ähnliche Messwerte erzeugt einer ersten Gruppe GA zugeordnet und die Materialien B₁ bis B_{M}. welche unter sich gleiche oder ähnliche aber von den Materialien A₁ bis AN, der ersten Gruppe GA verschiedene Messewerte erzeugen, einer zweiten Gruppe GB zugeordnet. Dabei kann eine Gruppe auch nur aus einem einzigen Material gebildet werden.

## Patentansprüche

1. Methode zur Bestimmung eines lokalen Anteils eines ersten Materials A in einem inhomogenen Verbund mit mindestens einem weiteren Material B mit einem Messgerät (16 oder 17), welches für das erste Material A einen deutlich höheren oder tieferen Messwert liefert, als für das restliche Material B in diesem Verbund, **dadurch gekennzeichnet, dass** vom lokalen Messwert ein Wert abgezogen wird, welcher gleich ist, wie der Messwert, welcher erhalten wird, wenn der Verbund nur aus dem Material B besteht.

2. Methode nach Anspruch 1 zur Bestimmung der lokalen Dicke oder des Dickenprofils einer einzelnen Schicht A in einer Mehrschichtfolie (20; 13, 13') mit einem beliebigen Messgerät (16 oder 17), welches für das Material A dieser Schicht einen deutlich höheren oder tieferen Messwert liefert, als für das Material B der restlichen Schichten der Mehrschichtfolie, **dadurch gekennzeichnet, dass** vom lokalen Messwert ein Wert abgezogen wird, welcher gleich ist, wie der Messwert, welcher erhalten wird, wenn alle Schichten ausschliesslich aus dem Material der restlichen Schichten bestehen, wobei die Messwerte der Dicke entsprechende Signale wie beispielsweise Absorptionswerte oder Frequenzen sind.

3. Methode nach einem der Ansprüche 1 oder 2, bei welcher das einzige Messgerät kapazitiv transmissiv (16; 21) oder kapazitiv reflektiv (17, 24) arbeitet

4. Methode nach einem der Ansprüche 1 bis 3, bei welcher in einem Verbund mit mehr als zwei verschiedenen Materialien, diese in zwei Gruppen GA und GB aufgeteilt werden, wobei der ersten Gruppe GA alle Materialien A₁ bis AN zugeordnet werden, auf welche das Messgerät 16, bzw. 17 ähnlich aber verschieden reagiert, als auf die Materialien B₁ bis B_{M} der zweiten Gruppe GB, auf welche das Messgerät 16, bzw. 17 unter sich ähnlich, aber von den Materialien A₁ bis AN der Gruppe GA verschieden reagiert.

5. Methode nach einem der Ansprüche 1 bis 4, bei welcher die Schichten einer Mehrschichtfolie mit mehr als zwei Schichten und Schichten aus zwei oder mehr verschiedenen Materialien, die in zwei Gruppen GA und GB aufgeteilt werden, wobei das Messgerät 16, bzw. 17 auf die Materialien A₁ bis AN der ersten Gruppe GA ähnlich, aber verschieden reagiert, als auf die Materialien B₁ bis B_{M} der zweiten Gruppe GB, auf welche das Messgerät 16, bzw. 17 unter sich ähnlich, aber von den Materialien A₁ bis AN der Gruppe GA verschieden reagiert.

6. Methode nach einem der Ansprüche 1 bis 5, bei welcher der Messwert, welcher gleich ist, wie der Messwert der erhalten wird, wenn alle Schichten oder der ganze Verbund aus Material der zweiten Gruppe GB besteht und vom lokalen Messwert abgezogen wird, dargestellt wird durch den Sollwert der Gesamtdicke oder durch den Mittelwert der Gesamtdicke welcher vorzugsweise durch gravimetrische Verwiegung bestimmt ist.

7. Methode nach einem der Ansprüche 1 bis 6, bei welcher alle Messwerte für das Material der Gruppe GA, bzw. die Schichten der Gruppe GA so kalibriert werden, dass deren Mittelwert dem Sollwert oder dem gravimetrisch ermittelten Mittelwert, oder dem auf andere Art durch die Produktion festgelegten Mittelwert für das Material der Gruppe GA entspricht.
